# EUROPEAN PATENT SPECIFICATION

(11) **EP 0 626 128 B1**
(45) Date of publication and mention of the grant of the patent: **04.06.1997**
(21) Application number: 94200829.3
(22) Date of filing: 29.03.1994
(51) Int. Cl.: A01D 43/10

(54) **A device for cutting crop**
Erntemähvorrichtung
Dispositif pour couper la récolte

(30) Priority: 25.05.1993 NL 9300886
(43) Date of publication of application: 30.11.1994
(73) Proprietor: Greenland Geldrop B.V., NL-5667 KP Geldrop (NL)
(72) Inventor: Quataert, Petrus Maria, NL-5671 CB Nuenen (NL); van Amstel, Leonardus Hendrikus Maria, NL-5665 PK Geldrop (NL)
(74) Representative: Vollebregt, Cornelis Jacobus, Ir.

(56) References cited:
- EP-A- 0 086 458
- WO-A-88/05627
- DE-A- 2 653 463
- DE-A- 3 142 594
- DE-A- 3 531 700
- DE-A- 4 017 495
- DE-A- 4 122 511
- FR-A- 2 078 637
- FR-A- 2 084 228
- GB-A- 2 169 184

## Description

The invention relates to a device for cutting crop, provided with a frame, with cutting means supported by the frame, which are rotatable about upwardly extending axes of rotation, with co-acting crushing rollers arranged behind the cutting means, which are rotatable about at least substantially horizontal axes of rotation, with a drum which is rotatable about an at least substantially horizontal axis of rotation, which is arranged behind the crushing rollers, in the path of crop moving from the crushing rollers towards the rear during operation and with a guide plate.

Devices of this type are known, for example from DE-A-2653463 and GB-A-2169184. With said known devices the drums ensure that the crop cut off by the cutting means and flung rearwards is spread over a strip of ground from which the crop has been cut. When these constructions are used, there may be a danger that part of the cut-off crop is flung onto crop which has not been cut yet, on the strip of ground adjacent to the strip of ground from which the crop is being cut.

In order to avoid this drawback it has been proposed in DE-A-2653463 to arrange the drum, which is disposed behind the crushing rollers and which is rotatable about an at least substantially horizontal axis of rotation, in such a manner that its axis of rotation includes an angle with the intended direction of movement of the mowing device during operation, so that the drum will also effect a displacement of the crop in a direction transversely to the intended direction of movement of the device. In practise this will lead to a complicated supporting structure for the drum, whilst also the design of the driving mechanism will lead to a complicated construction when use is made of a drum which is driven.

According to the invention the guide plate having guide vanes is provided between the crushing rollers and the drum, by means of which the crop is deflected in a direction transversely to the direction of movement of the device, whilst, when seen in the direction of movement of the device the center of the drum is staggered with respect to the center of the crushing rollers in the same direction as wherein the crop is deflected by the guide plates.

When the construction according to the invention is used a displacement of the crop between the crushing rollers and the drum in a direction transversely to the intended direction of movement of the device will be effected, whereby the drum may normally be rotatable about an axis of rotation extending perpendicularly to the direction of movement of the drum, as a result of which a simple construction of the device can be maintained. In addition to that the guide vanes have a certain decelerating effect on the crop, which is flung rearwards at a comparatively great speed. Surprisingly this appears to have an advantageous effect on the operation of the drum arranged behind the crushing rollers, as a result of which a particularly even and loose spreading of the crop over the ground can be effected.

A further advantage of the use of guide vanes is that it is also possible to arrange the guide vanes at different angles relative to the direction of movement. As a result of this a more even spreading of the crop over the entire length of the drum can be effected.

It is noted that DE-A-3,142,594 and FR-A-2,078,637 disclose the use of guide vanes for deflecting crop in a direction transversely to the direction of motion of the device. However said guide vanes are arranged behind the hindmost members displacing the crop to the rear.

The invention will be explained in more detail hereafter with reference to an embodiment of a device according to the invention diagrammatically illustrated in the accompanying figures.

Figure 1 is a plan view of an embodiment of a device according to the invention.

Figure 2 is a side view of figure 1.

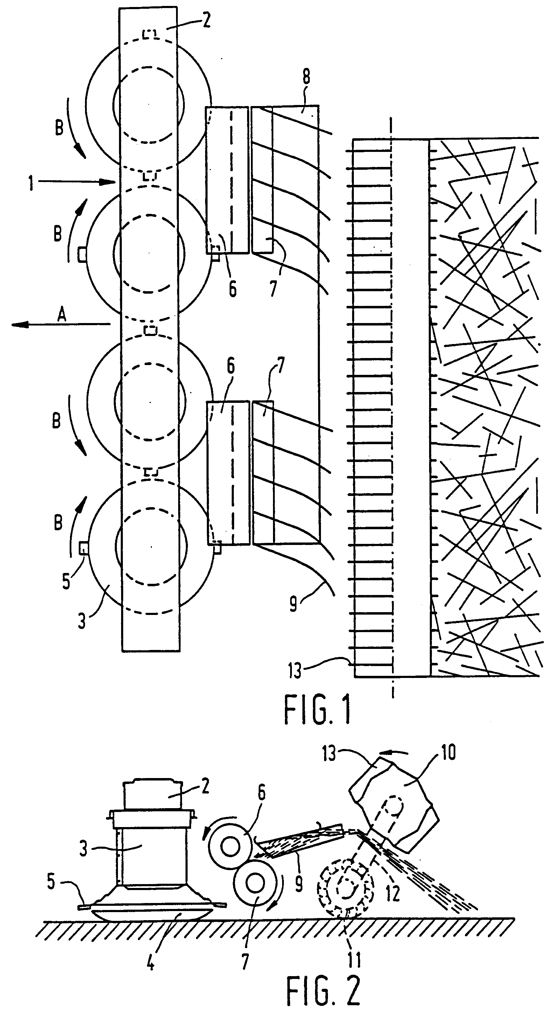

Figure 1 diagrammatically illustrates a mowing device 1, which is provided with a frame 2 and with a plurality of drum-shaped cutting means 3, which are rotatable about vertical axes of rotation. Dish-shaped supporting means 4 are conventionally arranged under the cutting means 3. Near their bottom ends the mowing means are provided with cutting blades 5. As is known such moving devices may be adapted for being coupled to the power lift of a tractor, whilst also drawn constructions are possible. Generally the cutting means will thereby be driven, via driving means not shown, from the power take-off of the vehicle propelling the mowing device.

Co-acting crushing rollers 6 and 7, which are rotatable about horizontal axes of rotation, are arranged behind the cutting means, seen in the intended direction of movement of the device during operation as indicated by the arrow A, which crushing rollers are supported, in a manner not shown, by the frame of the mowing device, and which may likewise be driven from the power take-off of the vehicle propelling the mowing device.

As is usual the mowing means are driven in such a manner that two cutting means arranged adjacent to each other rotate in opposite directions, as is indicated by the arrows B in figure 1, as a result of which the crop cut off by said cutting means is flung rearwards between the two cutting means. A pair of crushing rollers 6 and 7 is arranged behind each pair of co-acting cutting means, in such a manner that the crop moving rearwards between said two cutting means is caught by the co-acting crushing rollers 6 and 7 and moves towards the rear between said crushing rollers.

A guide plate 8 for the crop is arranged behind the crushing rollers, under which the crop flung rearwards by the crushing rollers 6 and 7 moves towards the rear. A plurality of vertical guide vanes 9 is secured to the bottom side of the plate 8, said guide vanes including an angle with the intended direction of movement of the device according to the arrow A, when seen in plan view (Figure 1). The ends of successive vanes 9 remote from the crushing rollers are bent more strongly thereby, so that the crop exiting from between the crushing rollers is spread over a greater width than the width over which said crop leaves the crushing rollers.

A drum 10 preferably having a polygonal circumference and being supported by the frame of the device in a manner not shown, is provided behind the guide plate, seen in the direction of movement, said drum 10 being rotatable about an axis of rotation extending parallel to the axes of rotation of the crushing rollers 6 and 7.

As is diagrammatically indicated in Figure 2, this drum 10 may be driven, for example from a wheel 11 running over the ground during operation, which is coupled to the drum via a chain drive or belt drive 12. The drive will thereby be constructed in such a manner that the circumferential speed of the drum 10 during operation will be at least substantially equal to the speed of movement of the device during operation.

When the above-described device is used the crop will be cut off while the device moves in the direction indicated by the arrow A, and be flung rearwards by the cutting means 3, where it is caught by the crushing drums 6 and 7 and passes between said crushing drums. As already explained above the crop leaving the crushing drums 6 and 7 is spread over a greater width with the aid of the guide vanes 9.

The crop which exits from between the crushing drums at a speed which is considerably greater than the speed of movement of the mowing device, because of the high circumferential speed of the crushing rollers 6 and 7 necessary to ensure a correct operation of the crushing rollers, collides with the circumference of the drum 10, that is against the lower part of the drum moving in a direction opposite to the direction of movement of the device. The rate of displacement of the crop is thereby reduced by the drum 10, to a speed which more or less corresponds with the speed of movement of the device, and subsequently falls on the ground. By reducing the speed at which the crop is being displaced to a speed which more or less corresponds with the speed of movement of the device before the crop falls on the ground, an even spreading of the crop over the ground is effected. In practice it has become apparent that in many cases it is not necessary to drive the drum in such a manner that the circumferential speed of the drum is more or less equal to the speed of movement of the device, but that a satisfactory operation is also obtained when the drum is arranged so as to be freely rotatable.

It will be apparent that as a result of the illustrated arrangement of the guide vanes 9 arranged behind the crushing means 6, 7 the cut-off crop is also moved in a direction transversely to the direction of movement according to the arrow A, so that a strip which is clear of cut-off crop is formed beside the crop to be cut off.

In order to promote a good feed-through of the crop along the guide vanes 9 means (not shown) may be provided, by which the guide vanes can be moved to and fro in a direction transversely to the intended direction of displacement of the crop.

Although the Figures show a so-called drum-type mower, it is also possible to use the invention with a so-called disc-type mower. With a disc-type mower the crushing rollers will generally extend across the entire working width of the mowing machine.

As is furthermore shown in Figures 1 and 2, guide plates 13 extending perpendicularly to the axis of rotation of the drum may be provided in side-by-side relationship on the outer circumference of the drum, said guide plates extending along part of the circumference of the drum. Instead of two plates divided over the circumference also a different number of plates may be provided.

Crop which comes into contact with the plates 13 is moved in a slightly different direction than crop which does not come into contact with the plates, which may contribute towards a more even spreading of the crop.

## Claims

1. A device for cutting crop, provided with a frame (2), with cutting means (3-5) supported by the frame, which are rotatable about upwardly extending axes of rotation, with co-acting crushing rollers (6, 7) arranged behind the cutting means (3-5), which are rotatable about at least substantially horizontal axes of rotation, with a drum (10), which is rotatable about an at least substantially horizontal axis of rotation, which is arranged behind the crushing rollers (6, 7), in the path of crop moving from the crushing rollers (6, 7) towards the rear during operation and with a guide plate (8), characterized in that the guide plate (8) having guide vanes (9) is provided between the crushing rollers (6, 7) and the drum (10), by means of which the crop is deflected in a direction transversely to the direction of movement (A) of the device and that, when seen in the direction of movement of the device the center of the drum (10) is staggered with respect to the center of the crushing rollers (6, 7) in the same direction as wherein the crop is deflected by the guide vanes (9).

2. A device according to claim 1, characterized in that at least part of said guide vanes (9) include a different angle with the direction of movement (A), in such a manner that the crop leaving said crushing rollers (6, 7) is spread over a greater width.

3. A device according to claim 1 or 2, characterized in that guide plates (13), which extend along part of the circumference, at least substantially perpendicularly to the axis of rotation of the drum (10), are provided on the outer circumference of the drum (10) in reglarly spaced-apart relationship.

4. A device according to any one of the preceding claims, characterized in that means are provided, by which the guide vanes (9) can be moved to and fro in a direction transversely to the direction of displacement of the crop during operation.

5. A device according to any one of the preceding claims, characterized in that said drum (10) is arranged so as to be freely rotatable.

6. A device according to any one of the preceding claims 1-4, characterized in that said drum (10) is driven at such a speed during operation, that the circumferential speed of the drum (10) is more or less equal to the speed of movement of the device during operation.

7. A device according to any one of the preceding claims, characterized in that said drum (10) is driven at such a speed during operation, that the circumferential speed of the drum is about 2-3 times as high as the speed of movement of the device during operation.

8. A device according to claim 6 or 7, characterized in that said drum (10) is driven by means of a ground wheel (11) running on the ground during operation.

9. A device according to any one of the preceding claims, characterized in that said drum (10) has a polygonal section.

## Patentansprüche

1. Vorrichtung zum Mähen, die mit einem Gestell (2), mit Schneideinrichtungen (3-5), die von dem Gestell getragen werden und sich um sich nach oben erstreckende Drehachsen drehen, mit damit zusammenwirkenden Quetschwalzen (6, 7), die hinter der Schneideeinrichtung (3-5) angeordnet sind und sich um wenigstens im wesentlichen horizontale Drehachsen drehen, mit einer Trommel (10), die sich um eine wenigstens im wesentlichen horizontale Drehachse dreht und hinter den Quetschwalzen (6, 7) auf dem Weg von Mähgut angeordnet ist, das sich von Quetschwalzen (6, 7) in Betrieb nach hinten bewegt, sowie mit einer Führungsplatte (8) versehen ist, **dadurch gekennzeichnet,** daß die Führungsplatte (8) mit Führungsflügeln (9) zwischen den Quetschwalzen (6, 7) und der Trommel (10) angeordnet ist, so daß das Mähgut in einer Richtung quer zur Bewegungsrichtung (A) der Vorrichtung umgeleitet wird, und daß, in der Bewegungsrichtung der Vorrichtung gesehen, die Mitte der Trommel (10) in bezug auf die Mitte der Quetschwalzen (6, 7) in der gleichen Richtung versetzt ist, in der das Mähgut durch die Führungsflügel (9) gebogen wird.

2. Vorrichtung nach Anspruch 1, **dadurch gekennzeichnet,** daß wenigstens ein Teil der Führungsflügel (9) einen unterschiedlichen Winkel zu der Bewegungsrichtung (A) einschließt, so daß das Mähgut, das aus den Quetschwalzen (6, 7) austritt, über eine größere Breite verteilt wird.

3. Vorrichtung nach Anspruch 1 oder 2, **dadurch gekennzeichnet,** daß Führungsplatten (13), die sich über einen Teil des Umfangs wenigstens im wesentlichen senkrecht zu der Drehachse der Trommel (10) erstrecken, am Außenumfang der Trommel (10) in regelmäßigen Abständen angeordnet sind.

4. Vorrichtung nach einem der vorangehenden Ansprüche, **dadurch gekennzeichnet,** daß eine Einrichtung vorhanden ist, mit der die Führungsflügel (9) in einer Richtung quer zur Verschiebungsrichtung des Mähgutes in Funktion hin- und herbewegt werden können.

5. Vorrichtung nach einem der vorangehenden Ansprüche, **dadurch gekennzeichnet,** daß die Trommel (10) so angeordnet ist, daß sie sich frei drehen kann.

6. Vorrichtung nach einem der vorangehenden Ansprüche 1-4, **dadurch gekennzeichnet,** daß die Trommel (10) in Betrieb mit einer solchen Geschwindigkeit angetrieben wird, daß die Umfangsgeschwindigkeit der Trommel (10) mehr oder weniger der Geschwindigkeit der Bewegung der Vorrichtung in Betrieb entspricht.

7. Vorrichtung nach einem der vorangehenden Ansprüche, **dadurch gekennzeichnet,** daß die Trommel (10) in Betrieb mit einer solchen Geschwindigkeit angetrieben wird, daß die Umfangsgeschwindigkeit der Trommel ungefähr zwei- bis dreimal so hoch ist wie die Geschwindigkeit der Bewegung der Vorrichtung in Betrieb.

8. Vorrichtung nach Anspruch 6 oder 7, **dadurch gekennzeichnet,** daß die Trommel (10) mittels eines Bodenrades (11) angetrieben wird, das in Betrieb auf dem Boden läuft.

9. Vorrichtung nach einem der vorangehenden Ansprüche, **dadurch gekennzeichnet,** daß die Trommel (10) einen vieleckigen Querschnitt hat.

## Revendications

1. Appareil pour couper la récolte, pourvu d'un châssis (2), de moyens de coupe (3-5) supportés par le châssis, qui sont capables de tourner autour d'axes de rotation qui s'étendent vers le haut, de cylindres d'écrasement coopérants (6, 7) agencés derrière les moyens de coupe (3-5), lesquels sont capables de tourner autour d'axes de rotation au moins sensiblement horizontaux, et d'un tambour (10), capable de tourner autour d'un axe de rotation sensiblement horizontal et agencé derrière les cylindres d'écrasement (6, 7), dans le trajet de la récolte qui se déplace depuis les cylindres d'écrasement (6, 7) vers l'arrière pendant le fonctionnement, et pourvu d'une plaque de guidage (8), caractérisé en ce que la plaque de guidage (8) comportant des aubes de guidage (9) est prévue entre les cylindres d'écrasement (6, 7) et le tambour (10), et qu'au moyen de celle-ci la récolte est défléchie dans une direction transversale à la direction de déplacement (A) de l'appareil, et en ce que, lorsqu'on le voit dans la direction de déplacement de l'appareil, le centre du tambour (10) est étagé par rapport au centre des cylindres d'écrasement (6, 7) dans la même direction que celle dans laquelle la récolte est défléchie par les aubes de guidage (9).

2. Appareil selon la revendication 1, caractérisé en ce qu'au moins une partie desdites aubes de guidage (9) forment un angle différent avec la direction de déplacement (A), de manière telle que la récolte qui quitte lesdits cylindres d'écrasement (6, 7) est répandue sur une largeur plus importante.

3. Appareil selon l'une ou l'autre des revendications 1 et 2, caractérisé en ce que des plaques de guidage (13), qui s'étendent le long d'une partie de la circonférence, au moins sensiblement perpendiculairement à l'axe de rotation du tambour (10) sont prévues sur la circonférence extérieure du tambour (10) suivant une relation d'écartement régulière.

4. Appareil selon l'une quelconque des revendications précédentes, caractérisé en ce qu'il est prévu des moyens, à l'aide desquels les aubes de guidage (9) peuvent être déplacées en va-et-vient dans une direction transversale à la direction de déplacement de la récolte pendant le fonctionnement.

5. Appareil selon l'une quelconque des revendications précédentes, caractérisé en ce que ledit tambour (10) est agencé de manière à être librement rotatif.

6. Appareil selon l'une quelconque des revendications précédentes 1 à 4, caractérisé en ce que ledit tambour (10) est entraîné à une vitesse telle pendant le fonctionnement que la vitesse circonférentielle du tambour (10) est plus ou moins égale à la vitesse de déplacement de l'appareil pendant le fonctionnement.

7. Appareil selon l'une quelconque des revendications précédentes, caractérisé en ce que ledit tambour (10) est entraîné à une vitesse telle pendant le fonctionnement que la vitesse circonférentielle du tambour est environ deux à trois fois plus élevée que la vitesse de déplacement de l'appareil pendant le fonctionnement.

8. Appareil selon l'une ou l'autre des revendications 6 et 7, caractérisé en ce que ledit tambour (10) est entraîné ait moyen d'une roue (11) qui se déplace sur le sol pendant le fonctionnement.

9. Appareil selon l'une quelconque des revendications précédentes, caractérisé en ce que ledit tambour (10) a une section polygonale.
